# EUROPEAN PATENT APPLICATION

(11) **EP 3 372 426 A1**
(43) Date of publication of application: **12.09.2018**
(21) Application number: 17159629.9
(22) Date of filing: 07.03.2017
(51) Int. Cl.: B60G 9/00, B60G 11/27, B60G 11/28, B60P 1/04

(54) **A WORKING MACHINE COMPRISING AT LEAST ONE PROPULSION AXLE**

(71) Applicant: Volvo Construction Equipment AB, 631 85 Eskilstuna (SE)
(72) Inventor: JOHANSSON, Peter, 352 64 Växjö (SE); UNNEBÄCK, Joakim, 633 46 Eskilstuna (SE)
(74) Representative: Volvo Technology Corporation

(57) **Abstract**

The invention relates to a working machine (1, 101, 201) comprising a working machine frame (20, 120, 220), at least one propulsion axle (10, 110, 210) having an elongated main body (11, 111) comprising a first end portion (112), a second end portion (113) and a center portion (111 C) arranged between the first and second end portions, each one of the first and the second end portions being adapted to be equipped with a propulsion hub (14, 114) for driving a working machine propulsion means. The elongated main body has a main body length (MBL) extending from the first end portion to the second end portion. The working machine further comprises a linkarm arrangement (15, 115, 215) pivotably connecting the propulsion axle with the working machine frame such that the roll axis (RA1) of the propulsion axle relative the working machine frame is comprised in the linkarm arrangement. At least the portion of the linkarm arrangement comprising the roll axis is positioned above the center portion of the propulsion axle.

## Description

### TECHNICAL FIELD

The invention relates to a working machine comprising a working machine frame and at least one propulsion axle.

### BACKGROUND

In the field of construction equipment there are a number of different working machines used to move, haul or dig material such as soil, gravel, rocks etcetera.

In connection with transportation of heavy loads, e.g. in contracting work, dump vehicles of the type of articulated haulers (also called frame-steered vehicles or dumpers) are frequently used. Such vehicles may be operated with large and heavy loads in areas where there are no roads, for example for transports in connection with road or tunnel building, sand pits, mines and similar environments.

A dump vehicle comprises a forward vehicle section (a so-called engine unit) which in turn comprises a forward frame, an engine, a cab, and a forward propulsion axle supported by the frame. The dump vehicle further comprises a rear vehicle section (a so-called load-carrying unit) which in turn comprises a rear frame, a tiltably arranged container for carrying loads, and one or two rear propulsion axles supported by the frame.

The frame of the engine unit is connected to the frame of the load-carrying unit by means of a special articulation joint allowing the engine unit and the load-carrying unit to pivot in relation to each other about an imaginary axis extending in the longitudinal direction of the vehicle. Thanks to the articulation joint, the engine unit and the load-carrying unit are allowed to move substantially independently of each other.

In order for the dump vehicle to absorb irregularities in the road, the dump vehicle is typically equipped with a suspension arrangement. Thus, the driver in the cap of the engine unit may have a sufficient pleasant ride even though the road is bumpy. However, when the dump vehicle encounters large irregularities in the ground, such as e.g. large rocks, the load carrying unit may have difficulties to run over such large irregularities due to limitations of the suspensions system. Thus, there is a need in the industry to improve the prior art.

### SUMMARY

In view of the above-mentioned and other drawbacks of the prior art, the object of the present inventive concept is to provide a working machine a first side and a second side arranged opposite to said first side, said second side being a load dumping side, which at least alleviates above mentioned problems.

According to a first aspect of the invention, the object is achieved by a working machine according to claim 1. More specifically, the invention relates to a working machine comprising:
a working machine frame,
at least one propulsion axle having an elongated main body comprising a first end portion, a second end portion and a center portion arranged between said first and second end portions, each one of said first and said second end portions being adapted to be equipped with a propulsion hub for driving a working machine propulsion means, said elongated main body having a main body length extending from said first end portion to said second end portion,
a linkarm arrangement pivotably connecting said propulsion axle with said working machine frame such that the roll axis of the propulsion axle relative the working machine frame is comprised in said linkarm arrangement,
wherein at least the portion of the linkarm arrangement comprising the roll axis is positioned above the center portion of said propulsion axle.

By the provision of a working machine wherein the roll axis of the propulsion axle relative the working machine frame is comprised in the linkarm arrangement pivotably connecting said propulsion axle with said working machine frame, and wherein said linkarm arrangement is positioned above the center portion of the elongated main body of said propulsion axle, the propulsion axle can pivot to a larger degree without the working machine risking to rollover. Hereby, larger irregularities in the ground can more easily be overcome and run over by the working machine.

It should be understood that the main body length is, according to one embodiment, the total length of the elongated main body. That is, the main body length may be described as extending from a first end of the elongated main body, said first end being comprised in said first end portion, to a second, opposite end of the elongated main body, said second end being comprised in said second end portion.

According to one embodiment, said length of the elongated main body is the same as the length, or total length, of the propulsion axle. Thus, the propulsion axle may be divided into corresponding first and second end portions as well as a corresponding center portion. In other words, said linkarm arrangement may be described as being positioned above the center portion of the propulsion axle.

It should be understood that the elongated main body may for e.g. for production process reasons, be divided into several sub-portions, where the sub-portion is connected to each other so as to form an elongated main body. In other words, the elongated main body need not to, but may, be made in one piece.

According to one embodiment, said elongated main body has an extension in the vertical direction, and is delimitated by at least a top surface of the elongated main body. Thus, in such embodiments, the roll axis of the propulsion axle is positioned vertically above the top surface of the elongated main body. Described differently, the top surface of said elongated main body extends in a top surface plane, such as e.g. in a horizontal plane, and the roll axis of the propulsion axle is positioned in a plane, such as in a horizontal plane, above said top surface plane.

According to one embodiment, the ratio of a first parameter A defined as the shortest distance between the center of the elongated main body and the roll axis of the propulsion axle, and a second parameter B defined as the shortest distance between the center of the elongated main body and ground is between 0.35 and 1.0, preferably between 0.55 and 0.75, and more preferably between 0.65 and 0.75.

As the roll axis is comprised in said linkarm arrangement, the first parameter A may also be defined as the shortest distance between the center of the elongated main body and the linkarm arrangement.

According to one embodiment, the center is the respective geometric center. Thus, it should be understood that the center of the elongated main body may refer to the geometric center of the elongated main body, i.e. a center within the elongated main body positioned in the center portion. Correspondingly, a center of the propulsion axle may be understood as the geometric center of the propulsion axle, which in at least some embodiments may coincide with the center of the elongated main body.

According to one embodiment, the shortest distance between the center of the elongated main body and the roll axis of the propulsion axle is between 200 mm and 500 mm, preferably between 300 mm and 400 mm.

Correspondingly, as the roll axis is comprised in said linkarm arrangement, the shortest distance between the center of the elongated main body and the roll axis of the propulsion axle, may be determined as the shortest distance between the center of the elongated main body and the linkarm arrangement.

According to one embodiment, the working machine according further comprises said first and second propulsion hubs for driving a working machine propulsion means, wherein the roll axis is positioned above the respective upper ends of the first and second propulsion hubs.

Stated differently, a first horizontal plane may be defined as extending through the upper ends of the first and second propulsion hubs, and the roll axis of the propulsion axle is thus positioned above said first horizontal plane. Correspondingly, as the roll axis is comprised in said linkarm arrangement, the linkarm arrangement is positioned (at least partly) above the first horizontal plane.

According to one embodiment, the working machine further comprises a propulsion axle suspension arrangement arranged between said working machine frame and said propulsion axle, said propulsion axle suspension arrangement comprising:
a first suspension device and a second suspension device arranged on opposite sides of the center of the elongated main body,
wherein said linkarm arrangement is arranged at least partly between said first and second suspension devices.

In other words, the roll axis of the propulsion axle will be positioned between said first and second suspension devices.

According to one embodiment, each one of said first and second suspension devices hold a suspension fluid. The suspension fluid may e.g. be air or compressed gas, or alternatively hydraulic oil.

When stating that said linkarm arrangement is arranged at least partly between said first and second suspension devices, it should be understood that the portion of the linkarm arrangement comprising the roll axis of the propulsion axle, is arranged between said first and second suspension devices. The portion of the linkarm arrangement comprising the roll axis is typically the portion of the linkarm arrangement comprising the coupling/connection between the propulsion axle and the linkarm arrangement.

According to one embodiment, said first and second suspension devices are arranged in the center portion of the elongated main body.

By arranging said first and second suspension devices in the center portion of the elongated main body, a relatively large pivoting movement of propulsion axle can be achieved. Thus, the configuration of the propulsion axle suspension arrangement can contribute to a large pivoting movement of the propulsion axle. Thus, the working machine may absorb road irregularities in an improved manner. Moreover, by arranging the first and second suspension devices in the center portion of the elongated main body, the shear forces in the first and second suspension devices can be kept relatively low. Another advantage of this configuration is that the applied forces to the working machine frame is lower compared to prior art solutions, and thus the working machine frame may be made simpler and possibly cheaper. For example, the working machine frame may be bolted instead of welded.

According to one embodiment, said linkarm arrangement comprises two linkarms and a propulsion axle connection hub, each one of said two linkarms having a respective propulsion axle end portion connected to the propulsion axle connection hub, and a respective frame end portion connected to said working machine frame, wherein the two linkarms is forming a V-shaped link.

In one embodiment the V-shaped link is formed by the link arms are co-axially or closely arranged onto the connection hub at their propulsion axle end portion, and transversally distanced at their frame end portion.

By having a V-shaped link, the linkarm arrangement prevents the propulsion axle to be pivoted in an undesired direction. Moreover, the roll axis of the propulsion axle is according to one embodiment comprised in the propulsion axle connection hub. Even more specifically, in one embodiment, the roll axis of the propulsion axle is positioned in the same horizontal plane as the propulsion axle end portions of the two linkarms.

For example, the propulsion connection hub of the linkarm arrangement may be a projection extending from the center portion of the elongated main body towards the working machine frame, e.g. in the vertical direction. The two link arms may be connected to said connection hub in order to connect the propulsion axle to the working machine frame.

It should be understood that the center portion of the elongated main body may have a different size and shape than the first and second end portions. For example, the center portion, or at least a portion of the center portion, may have a larger extension in the vertical direction compared to the first and second end portions. Thus, the center portion, or at least a portion of the center portion, may be formed as a bulb or ramp on the elongated main body. In such embodiments, the propulsion axle connection hub may be formed as a projection extending upwards from this bulb or ramp. Thus, the connection to the two linkarms may be made at an even higher position compared to an elongated main body not having such bulb or ramp and/or the propulsion axle connection hub may be made shorter.

According to one embodiment, the working machine comprises a rolling bearing comprised in the connection between the propulsion axle connection hub and the two linkarms.

According to one embodiment said propulsion axle is a first propulsion axle, and said working machine further comprises at least a second propulsion axle having an elongated main body comprising a first end portion, a second end portion and a center portion arranged between said first and second end portions, each one of said first and said second end portions being adapted to be equipped with a propulsion hub for driving a working machine propulsion means, said elongated main body having a main body length extending from said first end portion to said second end portion,
and wherein said linkarm arrangement is a first linkarm arrangement, and said working machine further comprises a second linkarm arrangement pivotably connecting said second propulsion axle with said working machine frame such that the roll axis of the second propulsion axle relative the working machine frame is comprised in said second linkarm arrangement.

The second propulsion axle, and/or the second linkarm arrangement, may according to one embodiment be similar to, e.g. constructed in the same way, as the first propulsion axle and/ the first linkarm arrangement, respectively. Alternatively or additionally, the working machine frame is a common frame for the first and second propulsion axles. Thus, the working machine frame may be referred to as a common working machine frame. According to one embodiment, the working machine comprises only one working machine frame. According to one embodiment, the different portions of the working machine frame is rigidly connected to each other. In other words, the working machine frame is not divided by an articulated joint.

For example, and according to one embodiment, said second linkarm arrangement may comprise two linkarms and a propulsion axle connection hub connected to said second propulsion axle, each one of said two linkarms having a respective propulsion axle end portion connected to the propulsion axle connection hub, and a respective frame end portion connected to said working machine frame, wherein the two linkarms is forming a V-shaped link.

Correspondingly for the second propulsion axle and the second linkarm arrangement, by having a V-shaped link, the second linkarm arrangement prevents the second propulsion axle to be pivoted in an undesired direction. Moreover, the roll axis of the second propulsion axle is according to one embodiment comprised in the propulsion axle connection hub connected to said second propulsion axle. Even more specifically, in one embodiment, the roll axis of the second propulsion axle is positioned in the same horizontal plane as the propulsion axle end portions of the two linkarms of the second linkarm arrangement.

According to one embodiment, said roll axis for said first propulsion axle coincides with said roll axis for said second propulsion axle. According to one embodiment, said roll axis for said first propulsion axle is the same as said roll axis for said second propulsion axle. According to one embodiment, said roll axis for said first propulsion axle and said roll axis for said second propulsion axle, extends in the longitudinal direction of the working machine.

According to one embodiment, said propulsion axle suspension arrangement is a first propulsion axle suspension arrangement, and said working machine further comprises a second propulsion axle suspension arrangement arranged between said second propulsion axle and said working machine frame.

According to one embodiment, said second propulsion axle suspension arrangement comprises:
at least a first projection arm and a second projection arm arranged on opposite sides of the center of the elongated main body of said second propulsion axle, said first and second projection arms extending from said second propulsion axle towards said working machine frame, respectively, and
at least a first suspension cushion arranged between said first projection arm and said working machine frame, and a second suspension cushion arranged between said second projection arm and said working machine frame,
wherein each one of said suspension cushion is configured to suspensionally take up a respective threshold load. Stated differently, each one of said suspension cushions is configured to suspensionally take up a load from e.g. the dump body, up to a threshold load.

According to one embodiment, the projection arm and suspension cushion of said second propulsion axle suspension arrangement is referred to as rubbersprings and shock absorbers.

According to one embodiment said respective projection arm is made of a rigid material, such as e.g. metal such as steel, while said respective suspension cushion is made of rubber or some other elastic material. Said suspension cushion may e.g. be an air bellow.

Thus, the second propulsion axle suspension arrangement may function as follows: During low-load activities, such as e.g. during driving or low loading, the second propulsion axle suspension arrangement is actively suspending the second propulsion axle relative the working machine frame. If the load on the second propulsion axle suspension arrangement increase, as e.g. during heavy loading or in a load dumping state in which the weight of the dump body and any load held therein is concentrated to a load dumping side of the working machine, the second propulsion axle suspension arrangement will cease to actively suspend the second propulsion axle relative the working machine frame, as the suspension cushions have been compressed to its maximum (i.e. the applied load is larger than the threshold load). Thus, the load from the working machine frame will be taken up by the respective projection arm.

In other words, and according to one embodiment, in said load dumping state, said suspension cushions are configured in such a way that a load from said working machine frame to said second propulsion axle suspension arrangement exceeds the threshold load, whereby said load from said working machine frame is taken up mainly by said at least one projection arms.

According to one embodiment, said second linkarm arrangement is at least partly arranged between said first and second projection arms. According to one embodiment, said second linkarm arrangement is at least partly arranged between said first and second suspension cushions.

According to one embodiment, said second propulsion axle suspension arrangement further comprises a third and fourth projection arms, each one extending from said working machine frame towards said second propulsion axle, and a respective third and fourth suspension cushions each one arranged between said third and fourth projection arms and said second propulsion axle, respectively wherein said first and third projection arms are arranged opposite each other such that said first suspension cushion is configured to be brought into contact with said third suspension cushion, and wherein said second and fourth projection arms are arranged opposite each other such that said second suspension cushion is configured to be brought into contact with said fourth suspension cushion.

According to one embodiment, said first and third projection arms together with said respective first and third suspension cushions, are referred to as a first pair of suspension arms, and said second and fourth projection arms together with said respective second and fourth suspension cushions, are referred to as a second pair of suspension arms. Said first and second pair of suspension arms may e.g. be arranged on opposite sides of a center of the second propulsion axle.

According to one embodiment, said working machine comprises a propulsion means linkarm connecting the propulsion means of said first and/or second propulsion axle directly to the working machine frame. Hereby, the first and/or second propulsion axle is prevented from pivoting in the longitudinal direction (e.g. prevented from pivoting forwards and backwards).

According to one embodiment the working machine, and its components, can be described as having a height, a width and a length. The width of the working machine extends in the same direction as the main direction of the elongated main body of the propulsion axle, which may be referred to as a transversal direction, the length of the working machine extends along the longitudinal direction of the working machine, the longitudinal direction being perpendicular to the transversal direction of the working machine, and the height of the working machine extends in a direction being perpendicular to both the longitudinal and transversal directions. Thus, the roll axis of the propulsion axle, or for embodiments where two propulsion axles are described the roll axis of the first propulsion axle and the second propulsion axle, extends in the longitudinal direction.

According to one embodiment the extension of the working machine may be defined in a x, y, z coordinate system, where the x-direction extends in the longitudinal direction and thus along the length of the working machine, the y-direction extends in the transversal direction, and thus along the width of the working machine, and the z-direction extends in a direction being perpendicular to both the x and y-directions, and thus along the height of the working machine. When described in the x, y, z coordinate system, the roll axis of the propulsion axle is positioned higher, i.e. the z-value is higher, compared to the center portion (or geometrical center) of the of the elongated main body of said propulsion axle. For embodiments where two propulsion axles are described, the roll axis of the first propulsion axle and the second propulsion axle, are positioned higher, i.e. the z-value is higher, compared to the respective center portion (or geometrical center) of the of the elongated main body of the first and the second propulsion axle, respectively.

Also described in the x, y, z coordinate system, the linkarm arrangement is positioned in an x, y plane above (i.e. higher or having a higher z-value) said center portion (or geometric center) of the elongated main body of the propulsion axis.

Optionally, the working machine is a self-propelled working machine.

Optionally, the working machine is a driverless working machine.

Optionally, the working machine comprises propulsion means, such as wheels or crawlers, for propelling the working machine.

Further advantages and advantageous features of the invention are disclosed in the following description and in the dependent claims.

### BRIEF DESCRIPTION OF THE DRAWINGS

Fig. 1 is a perspective view of a working machine according to one embodiment of the invention.
Fig. 2 is a side view of a working machine according to one embodiment of the invention.
Fig. 3 is a front view of a working machine according to one embodiment of the invention.
Fig. 4 is a perspective view of a portion of the working machine including a propulsion axle according to one embodiment of the invention.
Fig. 5 is a front view of a working machine according to one embodiment of the invention.
Fig. 6 is a side view of the working machine according to one embodiment of the invention.
Fig. 7 is a perspective view of the working machine of Fig. 6 according to one embodiment of the invention.

### DETAILED DESCRIPTION OF EXAMPLE EMBODIMENTS OF THE INVENTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

In the following, a working machine 1 is described. The inventive concept is applicable on any working machines within the fields of industrial construction machines or construction equipment, in particular dumpers/haulers. Although the invention will be described with respect to a hauler, the invention is not restricted to this particular machine, but may also be used in other working machines such as articulated haulers, excavators, backhoe loaders and wheel loaders.

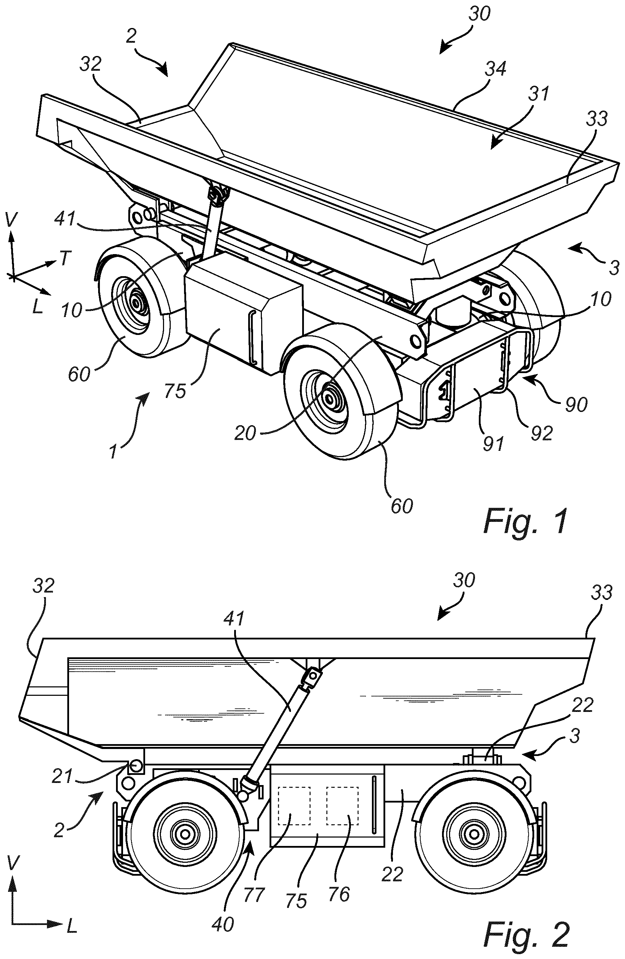

As seen in fig. 1 the working machine comprises a dump body 30 for accommodating a load. Merely as an example, and as is indicated in Fig. 1, the dump body 30 may be a loading platform of the working machine 1. The working machine 1 is adapted to have a load receiving condition in which the dump body 30 comprises an open load receiving area 31 outwardly delimited by a load receiving area circumference 34. In fig. 1 an embodiment is shown where the working machine 1 is adapted to assume the load receiving condition in a normal state. In other words, the working machine 1 embodiment illustrated in Fig. 1 comprises a dump body 30 which always comprises an open load receiving area 31 outwardly delimited by a load receiving area circumference 34. However, it is also envisioned that embodiments of the working machine may comprise cover means (not shown), such as a lid, that is adapted to cover at least a portion of the dump body 30 and which cover means can be moved in order to obtain the open load receiving area 31 to thereby arrive at the open load receiving area 14. Generally, the open load receiving area 31 may be an area that is directly accessible from the environment surrounding the working machine 1. For instance, the open load receiving area 31 may be an area that is directly accessible from the above of the dump body 30.

The working machine does not have a driver seat, but is intended to be autonomously and/or remotely driven. The machine further comprises a first side 3 and a second side 2 arranged opposite to the first side 3, the second side 2 being a load dumping side 2. The first side 3 may also be referred to as an opposite side 3. The opposite side 3 may be used as a front end side when the machine is driven in the direction that puts the opposite side 3 first. However, the working machine 1 may be drivable in any direction, i.e. it is bidirectional. Further, the dump body 30 comprise a load dumping end portion 32 arranged on the working machines load dumping side 2, and an opposite end portion 33 arranged on the working machines opposite side 3.

Further, still refereeing to fig. 1 the working machine 1 comprise a working machine frame 20 to which a pair of propulsion axles 10 are mounted. The working machine frame 20 further supports the dump body 30, and thereby carries the load of anything contained in the dump body 30 as well as the weight from the dump body itself. The propulsion axles 10 are equipped with a propulsion hub 14 (not shown in fig. 1) for driving propulsion means 60. In the figures the propulsion means 60 are illustrated as wheels, however, they may also be crawlers.

Further, an electrical engine 70 is installed onto the propulsion axle 10 being coupled to a drive shaft (not shown). The electrical engine 70 is mounted onto a front side of the propulsion axle's 10 elongated main body, said front side facing away from a centre of the working machine 1. The working machine may comprise one electrical engine 70 on each machine axle 10.

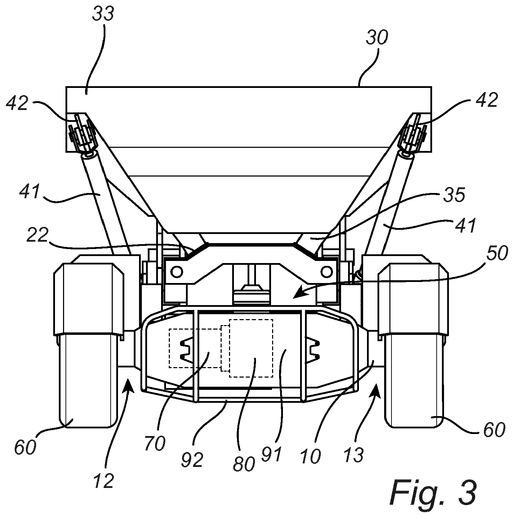

Further, the working machine 1 may comprise a tilting arrangement 40, such as a tilting arrangement comprising one or more tilting actuators 41, such as hydraulic actuators, for tilting the dump body 30 of the working machine 1. The tilting arrangement 40 is in one end attached to the frame 20 and in the other end to the dump body 30. Preferably, the tilting arrangement 40 comprise two tilting actuators 41 arranged at different sides of the dump body to ensure a stable tilting (as shown in fig 3).

Figure 1 finally disclose an electrical control arrangement 75, arranged to the frame of the working machine 1. The electrical control arrangement 75 may comprise (as illustrated in fig 2) a power source 76 e.g. a battery arrangement, for supporting the electrical engine(s) 70 and any other components with power. Further, the electrical control arrangement 75 may comprise a control unit 77 for controlling the working machine. The control unit 77 may be capable of receiving a remote control signal to enable the working machine to be remotely controlled. Such a signal may be received from an external transmission unit (not shown). It may further be capable of communicating any information to or from the working machine from or to a remote server (not shown). Such information may comprise usage data, service information, battery status, load, weight, capacity utilization or any other relevant information.

The load receiving area circumference 34 may form a closed loop that fully encloses a continuously open load receiving area 31. However, some embodiments of the working machine 1 may comprise one or more internal partitioning walls partitioning the open load receiving area 31 into two or more compartments (not shown).

The propulsion axle arrangement 10 also comprises a cover arrangement 90 for covering the electrical engine, wherein the cover arrangement comprises a first (inner) cover 91 and a second cover 92 being arranged on the outside of the first cover.

Turning to fig. 2, being the side view of the same embodiment of the vehicle, the working machine frame 20 is clearly illustrated as being coupled the propulsions means 60, i.e. the wheels, (via the propulsion axle, which is not seen in this view). Further, the illustration shows that the dump body 30 rests on the working machine frame 20. However, in the illustrated embodiment it is not in contact with the frame 20 during its whole length, but rather at the load dumping side 2 at an attachment means 21 being a pivotal arrangement allowing the dump body 30 to pivot relative the frame 20. The dump body 30 further rests on the frame 20 at a guiding plate portion 22, which will be further described in relation to fig 3. Further, the tilting arrangement 40, with one of the side's tilting actuators 41 is clearly sown in fig. 2. The tilting actuator 41 is in one end attached to the frame 20 and in the other end to the dump body 30. Further, the tilting actuator may be extended so that the dump body's opposite end portion 33 is elevated. Preferably, the tilting arrangement 40 comprise two tilting actuators 41 arranged at different sides of the dump body to ensure a stable tilting, and to spread the load on two actuators enabling a lower dimension of the tilting actuators for the same load.

As is also clearly shown in fig. 1 and 2, the working machine 1 extends in at least a longitudinal direction L, a vertical direction V and a transversal direction T. The longitudinal direction L is parallel to an intended direction of travel of the working machine 1. Further the transversal direction T is perpendicular to each one of the vertical direction V and the longitudinal direction L. That is, the transversal direction T is parallel to the general extension of the propulsion axles 10. These directions are intended to be interpreted relative the working machine, and should not be interpreted as being dependent of the vehicle's orientation.

Further, the electrical control arrangement 75 is illustrated in the side view of fig. 2. The placement of the electrical control arrangement 75 should only be considered to be an example. It is preferably arranged between the two working machine axles 10 and coupled to the frame 20, but the exact placement may be chosen in so that it is functionally placed in the environment which the working machine is to be used. Having the electrical control arrangement 75 on the outside of the frame, so that it is accessible from the side of the vehicle gives that advantage that both maintenance is facilitated and that any transceiving unit in the control arrangement, sending and/or receiving information may obtain a better signal and/or range. However, it would be possible to place the electrical control arrangement 75 transversally central on the working machine, i.e. under the dump body 30.

The dump body 30 of the working machine may further be designed so that the working machine 1 can assume a position relative to a second working machine of the same type, in which position the dump bodies at least partly overlap in at least the longitudinal or transversal direction. Generally, overlap of the dump bodies may be obtained on any side of the working machines 1. For instance, the overlap may be obtained along the longitudinal sides or the transversal sides of the working machines 1. For example, the above overlap may be at least 2%, preferably at least 5%, more preferred at least 8% of the load receiving length of the open load receiving area 31 in said longitudinal direction L.

Further, in figure 3 the working machine is shown in a front view, in one embodiment of the invention. In the front view, the working machine 1 is illustrated from one of the transversal sides, and more specifically from the side called the opposite side 3, being the side opposite of the load dumping side 2. The frame 20 is coupled to the propulsion axle 10, via the suspension arrangement 50 allowing the frame 20 to move relative the propulsion axle 10 in the vertical plane. Further, the propulsion axle comprises two opposing end portions 12, 13 each having a propulsion hub (not shown) coupled the propulsions means 60, i.e. the wheels in this embodiment. Further, the dump body 30 rests on the working machine frame 20 at a guiding plate portion 22. The dump body 30 comprise a load supporting end portion 35, which cooperates with a guiding plate portion 22 and works as a guiding means for guiding the dump body towards a transversally centred position during a pivotal downward movement of the dump body relative the frame. The formation of these guiding plate portions and load supporting end portions may be formed with an angle to a horizontal plane, i.e. with a vertical inclination. Further, the tilting arrangement 40 is clearly shown having two tilting actuators 41 arranged on each longitudinal side of the dump body. The tilting actuators 41 are attached to the dump body 30 at its top portion in a rotational coupling 42. Further, the tilting actuator may be extended so that the dump body's opposite end portion 33 is inclined. Finally, fig. 3 illustrates that the propulsion axle is equipped with an electrical engine 70 being drivably coupled to a drive shaft inside the propulsion axle (thus not shown) and mounted onto the illustrated front side 16 of the elongated main body 11, said front side 16 facing away from a centre of the working machine 1 in the transversal direction. This is further illustrated in the subsequent figures. In figures 1-3 the electrical engine 70 and gear box 80 are hidden by the engine cover 90, and is thus only noted with a dashed line in fig 3.

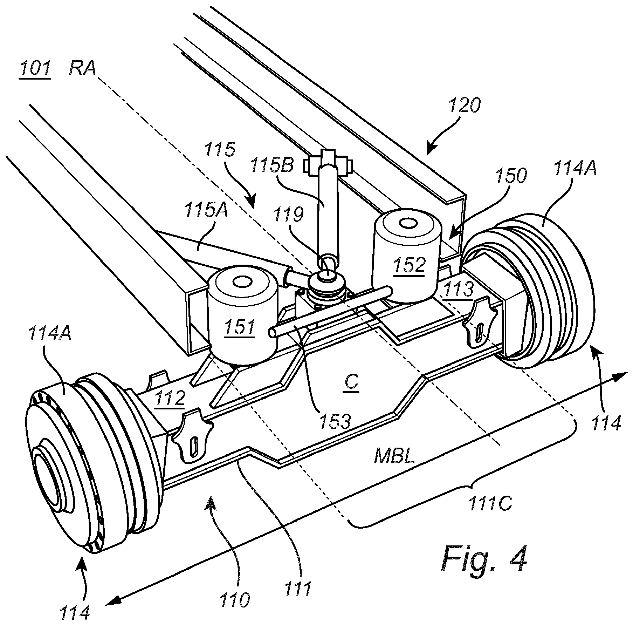

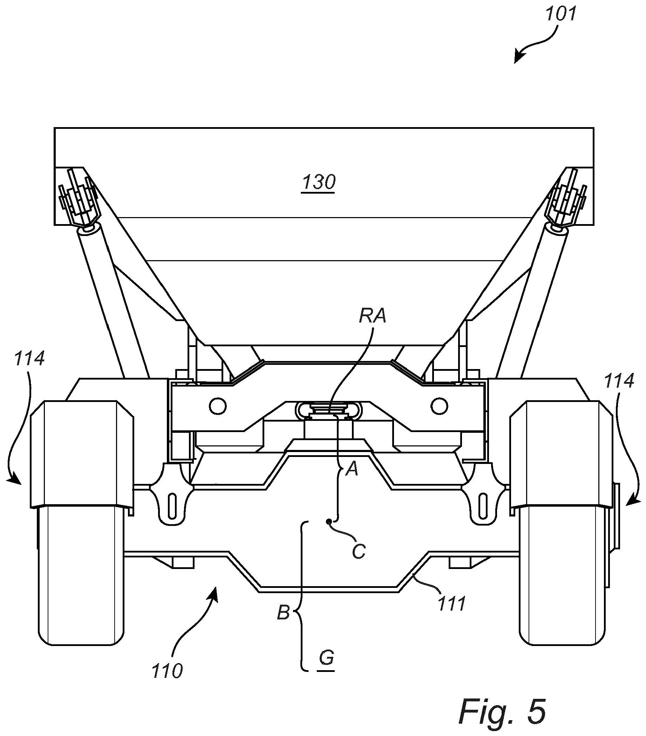

In Fig. 4 and Fig. 5 a working machine 101 according to one embodiment is shown. In Fig. 4 a perspective view of a portion of the working machine 101 is shown, and in Fig. 5 a front view of the working machine is shown. The configuration shown in Figs. 4 and 5 is applicable to the working machine 1 shown in Figs. 1-3. Moreover, as the working machine 101 in Figs. 4 and 5 comprises the same or similar features and components as the working machine 1 in Figs. 1-3, similar reference numerals are used for corresponding features, but with the addition of "100".

In Fig. 4, a working machine frame 120 and one propulsion axle 110 having an elongated main body 111 comprising a first end portion 112, a second end portion 113 and a center portion 111 C arranged between the first and second end portions 112, 113, is shown. Each one of the first second end portions 112, 113 is here equipped with a respective propulsion hub 114 for driving a working machine propulsion means such as e.g. a wheel. The elongated main body 111 has a main body length MBL extending from the first end portion 112 to the second end portion 113.

In Fig. 4, a linkarm arrangement 115 is pivotably connecting the propulsion axle 110 with the working machine frame 120. The linkarm arrangement 115 comprises two linkarms 115A, 115B, and a propulsion axle connection hub 119, each one of the two linkarms 115A, 115B has a respective propulsion axle end portion connected to the propulsion axle connection hub 119, and a respective frame end portion connected to the working machine frame 120. The two linkarms 115A, 115B is in Fig. 4 forming a V-shaped link. Hereby, the linkarm arrangement prevents the propulsion axle to be pivoted in an undesired direction.

The roll axis RA of the propulsion axle relative the working machine frame is comprised in the linkarm arrangement 115. As the linkarm arrangement 115 is positioned above the center portion 111C of the elongated main body 111, the roll axis RA (and roll center) of the propulsion axle 110 is positioned above the center portion 111C of the elongated main body 111.

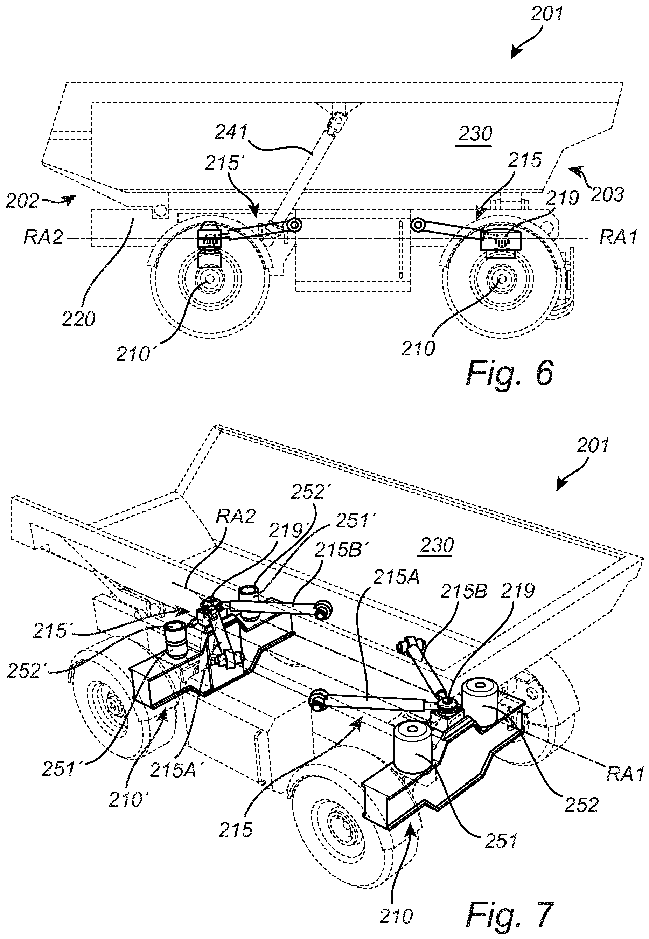

Also shown in Fig. 4 is a propulsion axle suspension arrangement 150 arranged between the working machine frame 120 and the propulsion axle 110. The propulsion axle suspension arrangement 150 of Fig. 4 may for example be used as the first propulsion axle suspension arrangement 250 in Figs. 5 and 6. Note than in Fig. 4, a portion of the working machine frame 120 covering the suspension arrangement 150 from above is removed for clarity reasons. The propulsion axle suspension arrangement 150 comprises a first suspension device 151 and a second suspension device 152 arranged on opposite sides of a center C of the elongated main body 111, each one of the first and second suspension devices 151, 152 is holding a suspension fluid (not shown). In Fig. 4, the roll axis RA (and roll center), as well as at least a part of the linkarm arrangement 115, such as the propulsion axle connection hub 119, is centrally positioned between the first and the second suspension devices 151, 152.

As can be seen in Fig. 4, the first and second suspension devices 151, 152 are arranged in the center portion 111C of the elongated main body 111. In Fig. 4, the center portion is centrally arranged on the elongated main body 111, and is delimited to be closer to, but not higher than, 50 % of the main body length MBL.

As also shown in Fig. 4, the propulsion axle suspension arrangement 150 further comprises a fluid communication path 153 configured to enable suspension fluid communication between the first suspension device 151 and the second suspension device 152. Thus, fluid may be exchanged by the first and second suspension device 151, 152 via the fluid communication path 153. In Fig. 4, the fluid communication path 153 is passively unregulated. In other words, according to such embodiments, there are no vents or valves regulating the flow of fluid through the fluid communication path 153.

Preferably, the propulsion axle suspension arrangement 150 of Fig. 4 is at least partly pneumatically driven. Thus, in such embodiments the first suspension device 151 is a first air bellow 151, and the second suspension device 152 is a second air bellow 152.

The positioned of the roll axis RA above the propulsion axle 110 can be defined differently. For example, the roll axis may be defined as being positioned above the respective upper ends 114A of the first and second propulsion hubs 114.

Turning now to Fig. 5, showing a front view of the working machine 101 in full. That is, besides the components described in Fig. 4, the working machine 101 in Fig. 5 further comprise inter alia: a dump body 130, and wheels as propulsion means attached to the propulsion hubs 114 (shown in Fig. 4).

In Fig. 5, it is clearly shown that the roll axis RA is positioned above the propulsion axle 110. As shown in Fig. 5, a ratio of a first parameter A defined as the shortest distance between the center C of the elongated main body 111 and the roll axis RA of the propulsion axle 110, and a second parameter B defined as the shortest distance between the center C of the elongated main body 111 and ground G is approximately 0.8. According to one embodiment the ratio between A and B is somewhere between 0.35 and 1.0. According to one embodiment, the ratio between A and B is between 0.55 and 0.75, or more preferably between 0.65 and 0.75. Defined differently, the shortest distance between the center C of the elongated main body 111 and the roll axis RA1 of the propulsion axle 110 (i.e. parameter A) is between 200 mm and 500 mm, preferably between 300 mm and 400 mm.

In Fig. 6 and Fig. 7 a working machine 201 according to one embodiment is shown. Fig. 6 is a side view of the working machine 201 and Fig. 7 is a perspective view of the working machine 201 of Fig. 5. The configuration shown in Figs. 6 and 7 is applicable to the working machine 1 shown in Figs. 1-3, and the working machine 101 of Figs. 4 and 5. Moreover, as the working machine 201 in Figs. 6 and 7 comprises the same or similar features and components as the working machine 1 in Figs. 1-3, and the working machine 101 of Figs. 4-5, similar reference numerals are used for corresponding features, but with the addition of "200" compared to those used in Fig. 1-3.

In Fig. 6, the working machine 201 has a first side 203 and a second side 202 arranged opposite to the first side 203 is shown, the second side 202 being a load dumping side 202. The working machine 201 comprising a dump body 230 for receiving a load, a working machine frame 220 for supporting the dump body 230, and at least one tilting actuator 241 connecting the working machine frame 220 and the dump body 230 such that, in a load dumping state, the dump body 230 is tiltable by means of the at least one tilting actuator 241 in order to discharge the load from the dump body (not shown).

The working machine 201 further comprises a first propulsion axle 210 arranged in the first side 203 of the working machine 201, and a second propulsion axle 210' arranged in the second side 202 of the working machine 201.

As shown in Figs. 6 and 7, the working machine 201 further comprises a first linkarm arrangement 215 pivotably connecting the first propulsion axle 210 with the working machine frame 220 such that the roll axis RA1 of the first propulsion axle 210 relative the working machine frame 220 is comprised in the first linkarm arrangement 215 (e.g. in the first propulsion axle connection hub 219 as described below,). Correspondingly, the working machine 201 further comprises a second linkarm arrangement 215' pivotably connecting the second propulsion axle 210' with the working machine frame 220 such that the roll axis RA2 of the second propulsion axle 210' relative the working machine frame 220 is comprised in the second linkarm arrangement 215'. (e.g. in the second propulsion axle connection hub 219' as described below. As shown in Figs. 6 and 7, the first and second linkarm arrangements 215, 215' are positioned above the first and second propulsion axles 210, 210', respectively. Thus, the respective roll axis RA1, RA2 is positioned above the first and second propulsion axles 210, 210', respectively. As also shown in Figs. 6-7, the two roll axis RA1, RA2 coincides, and the coinciding roll axis is positioned horizontally above the respective upper ends of the first and second propulsion hubs.

As shown in Fig. 7, each one of the first and the second linkarm arrangements 215, 215' comprise two respective link arms 215A, 215B, 215A', 215B' and a respective propulsion axle connection hub 219, 219'. The two link arms 215A, 215B of the first linkarm arrangement 215 will hereafter be referred to as the first pair of linkarms, and the two link arms 215A', 215B' of the second linkarm arrangement 215' will hereafter be referred to as the second pair of linkarms. Each one of the linkarms 215A, 215B, 215A', 215B' in the respective first and second pair of linkarms, has a respective propulsion axle end portion connected to the respective propulsion axle connection hub 219, 219', and a respective frame end portion connected to the working machine frame 220. The linkarms 215A, 215B, 215A', 215B' in the respective first and second pair of linkarms forms a respective V-shaped link. Hereby, the linkarm arrangements 215, 215' prevents the respective propulsion axle to be pivoted in an undesired direction.

Now the position of the respective roll axis RA1, RA2 above the respective first and second propulsion axles 210, 210', will be described in more detail. The position of the roll axis RA1 of the first propulsion axle 210 may be described as follows: a ratio of a first parameter A defined as the shortest distance between the center of the first propulsion axle 210 and the roll axis RA1 of the first propulsion axle 210, and a second parameter B defined as the shortest distance between the center of the first propulsion axle 210 and the ground G is between 0.35 and 1.0, preferably between 0.55 and 0.75, and more preferably between 0.65 and 0.75. That is A/B is between 0.35 and 1.0, preferably between 0.55 and 0.75, and more preferably between 0.65 and 0.75. Defined differently, the shortest distance between the center of the first propulsion axle 210 and the roll axis RA1 of the first propulsion axle 210 (i.e. parameter A) is between 200 mm and 500 mm, preferably between 300 mm and 400 mm.

Correspondingly, the position of the roll axis RA2 of the second propulsion axle 210' may be described as follows: a ratio of a third parameter C defined as the shortest distance between the center of the second propulsion axle 210' and the roll axis RA2 of the second propulsion axle 210', and a fourth parameter D defined as the shortest distance between the center of the second propulsion axle 210' and the ground G is between 0.35 and 1.0, preferably between 0.55 and 0.75, and more preferably between 0.65 and 0.75. That is C/D is between 0.35 and 1.0, preferably between 0.55 and 0.75, and more preferably between 0.65 and 0.75. Defined differently, the shortest distance between the center of the second propulsion axle 210' and the roll axis RA2 of the second propulsion axle 210' (i.e. parameter C) is between 200 mm and 500 mm, preferably between 300 mm and 400 mm.

The working machine 201 of Figs. 6 and 7 typically further comprises a first propulsion axle suspension arrangement 250 arranged between the first propulsion axle 210 and the working machine frame 220; and a second propulsion axle suspension arrangement 250' arranged between the second propulsion axle 210' and the working machine frame 220.

As shown in Fig. 6, the second propulsion axle suspension arrangement 250' comprises at least one projection arm 251' extending from the second propulsion axle 250' towards the working machine frame 220, and a suspension cushion 252' arranged between the projection arm 251' and the working machine frame 220. The suspension cushion 252' is configured to suspensionally take up a load, up to a threshold load. The suspension cushion 252' is configured in such a way that, in a load dumping state, the load from the working machine frame 220 to the second propulsion axle suspension arrangement 250' exceeds the threshold load. Thus, in the load dumping mode, the load from the working machine frame 220 will be taken up mainly by the at least one projection arm 251'. Hereby, the connection between the working machine frame 220 and the second propulsion axle suspension arrangement 250' is made stiff, i.e. is "bottoming out". Thus, the suspension ability of the second propulsion axle suspension arrangement 250' ceases. In other words, the second propulsion axle suspension arrangement 250' is compressed to its maximum, or to its extreme limit.

As shown in Fig. 7, a respective projection arm 251' is arranged on opposite sides of the center of the second propulsion axle 210' . Each one of the respective projection arms 251' comprises a respective suspension cushion 252'. Thus, at least a portion of the second linkarm arrangement 215' is arranged between the first and second projection arms 251'. Stated differently, at least the portion of the second linkarm arrangement 215' comprising the roll axis RA2 of the second propulsion axle 210' is arranged between the first and second projection arms 251'. For example, the propulsion axle connection hub 219' is arranged between the first and second projection arms 251'.

It is to be understood that the present invention is not limited to the embodiments described above and illustrated in the drawings; rather, the skilled person will recognize that many changes and modifications may be made within the scope of the appended claims.

## Claims

1. A working machine, comprising
a working machine frame,
at least one propulsion axle having an elongated main body comprising a first end portion, a second end portion and a center portion arranged between said first and second end portions, each one of said first and said second end portions being adapted to be equipped with a propulsion hub for driving a working machine propulsion means, said elongated main body having a main body length extending from said first end portion to said second end portion,
a linkarm arrangement pivotably connecting said propulsion axle with said working machine frame such that the roll axis of the propulsion axle relative the working machine frame is comprised in said linkarm arrangement,
**characterized in that** at least the portion of the linkarm arrangement comprising the roll axis is positioned above the center portion of said propulsion axle.

2. A working machine according to claim 1, wherein the ratio of a first parameter A defined as the shortest distance between the center of the elongated main body and the roll axis of the propulsion axle, and a second parameter B defined as the shortest distance between the center of the elongated main body and ground is between 0.35 and 1.0, preferably between 0.55 and 0.75, and more preferably between 0.65 and 0.75.

3. A working machine according to any one of claims 1-2, wherein the shortest distance between the center of the elongated main body and the roll axis of the propulsion axle is between 200 mm and 500 mm, preferably between 300 mm and 400 mm.

4. A working machine according to any one of claims 1-3, further comprising said first and second propulsion hubs for driving a working machine propulsion means, and wherein the roll axis is positioned above the respective upper ends of the first and second propulsion hubs.

5. A working machine according to any one of the preceding claims, further comprising a propulsion axle suspension arrangement arranged between said working machine frame and said propulsion axle, said propulsion axle suspension arrangement comprising:
a first suspension device and a second suspension device arranged on opposite sides of the center of the elongated main body,
wherein said linkarm arrangement is arranged at least partly between said first and second suspension devices.

6. A working machine according to claim 5, wherein said first and second suspension devices are arranged in the center portion of the elongated main body.

7. A working machine according to any one of the preceding claims, wherein said linkarm arrangement comprises two linkarms and a propulsion axle connection hub, each one of said two linkarms having a respective propulsion axle end portion connected to the propulsion axle connection hub, and a respective frame end portion connected to said working machine frame, wherein the two linkarms is forming a V-shaped link.

8. A working machine according to any one of the preceding claims, wherein said propulsion axle is a first propulsion axle, and said working machine further comprises at least a second propulsion axle having an elongated main body comprising a first end portion, a second end portion and a center portion arranged between said first and second end portions, each one of said first and said second end portions being adapted to be equipped with a propulsion hub for driving a working machine propulsion means, said elongated main body having a main body length extending from said first end portion to said second end portion,
and wherein said linkarm arrangement is a first linkarm arrangement, and said working machine further comprises a second linkarm arrangement pivotably connecting said second propulsion axle with said working machine frame such that the roll axis of the second propulsion axle relative the working machine frame is comprised in said second linkarm arrangement.

9. A working machine according to claim 8, wherein said second linkarm arrangement comprises two linkarms and a propulsion axle connection hub connected to said second propulsion axle, each one of said two linkarms having a respective propulsion axle end portion connected to a second propulsion axle connection hub, and a respective frame end portion connected to said working machine frame, wherein the two linkarms is forming a V-shaped link..

10. A working machine according to any one of claims 8-9, wherein said roll axis for said first propulsion axle coincides with said roll axis for said second propulsion axle.

11. A working machine according to any one of claims 8-10, when being dependent on claim 5, wherein said propulsion axle suspension arrangement is a first propulsion axle suspension arrangement, and said working machine further comprises a second propulsion axle suspension arrangement arranged between said second propulsion axle and said working machine frame.

12. A working machine according to claim 11, wherein said second propulsion axle suspension arrangement comprises:
at least a first projection arm and a second projection arm arranged on opposite sides of the center of the elongated main body of said second propulsion axle, said first and second projection arms extending from said second propulsion axle towards said working machine frame, respectively, and
at least a first suspension cushion arranged between said first projection arm and said working machine frame, and a second suspension cushion arranged between said second projection arm and said working machine frame,
wherein each one of said suspension cushion is configured to suspensionally take up a respective threshold load.

13. A working machine according to claim 12, wherein said second linkarm arrangement is arranged at least partly between said first and second projection arms.
